# EUROPEAN PATENT APPLICATION

(11) **EP 3 116 019 A1**
(43) Date of publication of application: **11.01.2017**
(21) Application number: 15762215.0
(22) Date of filing: 10.03.2015
(51) Int. Cl.: H01L 21/368, H01L 51/44, H01L 51/46

(54) **CRYSTAL GROWTH CONTROL AGENT, METHOD FOR FORMING p-TYPE SEMICONDUCTOR MICROPARTICLES OR p-TYPE SEMICONDUCTOR MICROPARTICLE FILM, COMPOSITION FOR FORMING HOLE TRANSPORT LAYER, AND SOLAR CELL**

(30) Priority: 14.03.2014 JP 2014052497; 14.03.2014 JP 2014052498
(71) Applicant: Tokyo Ohka Kogyo Co., Ltd., Kawasaki-shi, Kanagawa 211-0012 (JP)
(72) Inventor: NAKAMURA, Akimasa, Kawasaki-shi Kanagawa 211-0012 (JP); YAMANOUCHI, Atsushi, Kawasaki-shi Kanagawa 211-0012 (JP); ASAI, Takahiro, Kawasaki-shi Kanagawa 211-0012 (JP); ISHIKAWA, Kaoru, Kawasaki-shi Kanagawa 211-0012 (JP)
(74) Representative: Cabinet Plasseraud
(86) International application number: PCT/JP2015/056979
(87) International publication number: WO 2015/137324

(57) **Abstract**

First, there is provided a crystal growth control agent which is capable of suppressing an increase in a crystal size of a p-type semiconductor, and performing chemical modification on a surface of p-type semiconductor microparticle, a method for forming p-type semiconductor microparticles or a p-type semiconductor microparticle film by using the crystal growth control agent, a composition for forming a hole transport layer of a solar cell, and a solar cell using the composition for forming a hole transport layer. Second, there is provided a composition for forming a hole transport layer which is capable of prompting crystallization and fine pulverization of the p-type semiconductor and performing the chemical modification on the surface of the p-type semiconductor microparticle even in the case where an organic salt (an ionic liquid) containing an anion other than the thiocyanate ion is used, and a solar cell using the composition for forming a hole transport layer. According to the present invention, the crystal growth control agent contains at least one of sulfur-containing compounds (except for thiocyanate) selected from the group consisting of a compound, which generates a thiolate anion due to dissociation of a proton or a cation, and a disulfide compound, and controls crystal growth of a p-type semiconductor.

## Description

### Technical Field

The present invention relates to a crystal growth control agent for controlling crystal growth of a p-type semiconductor, a method for forming p-type semiconductor microparticles or a p-type semiconductor microparticle film by using the crystal growth control agent, a composition for forming a hole transport layer of a solar cell, and a solar cell using the composition for forming a hole transport layer.

### Background Art

### Background Art 1

A dye-sensitized solar cell is formed of a working electrode, a porous n-type semiconductor layer including a porous n-type semiconductor (for example, titanium dioxide) on which a dye as a sensitized material is adsorbed, a electrolyte solution containing a redox mediator such as iodine, and a counter electrode. In such a dye-sensitized solar cell, there is a concern of leakage of the electrolyte solution. In this regard, a fully solid dye-sensitized solar cell (hereinafter, also referred to as sDSSC) using a p-type semiconductor which is capable of transporting holes instead of the electrolyte solution has been developed. As a candidate for the p-type semiconductor, various organic-based materials or inorganic-based materials can be exemplified, and copper iodide is mainly used as an inorganic-based p-type semiconductor.

In order to manufacture a high efficiency sDSSC, it is necessary that pores of the porous n-type semiconductor on which the dye is adsorbed are filled with the p-type semiconductor. The pores are filled with the p-type semiconductor in such a manner that a solution of the p-type semiconductor is added dropwise onto the porous n-type semiconductor layer which includes the porous n-type semiconductor and the solution is dried. At this time, when a solution only containing the p-type semiconductor as a solute is used, the pores of the porous n-type semiconductor are not easily filled with the p-type semiconductor. For example, in NPL 1, when a solution only containing copper iodide as a solute is added dropwise onto a porous titanium dioxide layer and then is dried, copper iodide crystals having a size of approximately 10 µm are grown, and thus titanium dioxide pores are not easily filled with copper iodide.

NPLs 1 and 2, and PTLs 1 and 2 disclose that when an organic salt (an ionic liquid) having a thiocyanate ion as an anion is added to a copper iodide solution, or a thiocyanate is added to the copper iodide solution, crystal growth of copper iodide is controlled so as to form a small-sized copper iodide crystal, and thereby titanium dioxide pores are filled with copper iodide. It is known that a crystal growth control effect due to thiocyanate ions is obtained in the case where sulfur contained in the thiocyanate ion bonds to copper on the surface of the copper iodide crystal (NPL 2).

In addition, recently, a solar cell using halogenated lead-based perovskite which is an organic-inorganic composite material also has become known (NPL 3).

### Background Art 2

In the fully solid dye-sensitized solar cell using the p-type semiconductor such as copper iodide, and the organic salt (the ionic liquid and an ambient temperature molten salt), it is necessary that a p-type semiconductor crystal is finely pulverized, and then pores of the porous n-type semiconductor such as titanium dioxide are filled with the finely pulverized p-type semiconductor crystal. It is known that when a thiocyanate is used as an ionic liquid, an sDSSC which exhibits excellent conversion efficiency is obtained in such a manner that thiocyanate ions serve as a crystal growth inhibitor, a copper iodide crystal is finely pulverized, and then titanium dioxide pores are filled with the finely pulverized copper iodide crystal.

In order to obtain a high performance sDSSC, chemical modification of the surface of the p-type semiconductor microparticles such as the copper iodide crystal is considered as one of important factors. In addition, regardless of use of the sDSSC, in a solar cell including a solid hole transport layer, when the surface of the p-type semiconductor microparticles is chemically modified, it is expected that a function of the p-type semiconductor microparticles will be able to be further improved or expanded. In the conventional method for obtaining microparticles of the p-type semiconductor such as copper iodide by using a thiocyanate ion, the thiocyanate ions are bonded to the surface of the p-type semiconductor microparticles. Since a thiocyanate ion has only a cyano group as a functional group which is capable of performing chemical modification, it is difficult to perform various chemical modifications on the surface of the p-type semiconductor microparticles according to the conventional method.

Since a cation or anion can be freely selected for the organic salt (the ionic liquid) to freely change the ion conductivity, viscosity, or the like. If an sDSSC which exhibits excellent conversion efficiency can be obtained by selecting an organic salt having an anion other than a thiocyanate ion, it is possible to solve the above-described problem of difficulty of various chemical modifications to the surface of the p-type semiconductor microparticles, which is caused when an organic salt having a thiocyanate ion as an anion is used.

However, in PTL 3, when the fully solid dye-sensitized solar cell is obtained by fixing the cation of the ionic liquid to 1-ethyl-3-methylimidazolium, and changing the type of anion in the ionic liquid, the conversion efficiency is high in the case where a thiocyanate ion is used as the anion, and the conversion efficiency in the case where other anions are used is equal to or lower than half of that in the case where a thiocyanate ion is used.

### Citation List

### Patent Literature

[PTL 1] Japanese Unexamined Patent Application, Publication No. 2001-230435
[PTL 2] Japanese Unexamined Patent Application, Publication No. 2003-218371
[PTL 3] Japanese Unexamined Patent Application, Publication No. 2001-230434

### Non Patent Literature

[NPL 1] "Dye-sensitized solid state solar cells: Use of crystal growth inhibitors for deposition of the hole collector", Chemistry of Materials, (USA), 2002, Vol. 14, p. 954 and 955
[NPL 2] "Fabrication of Dye-sensitized solar cell using triethylamine hydrothiocyanate as a CuI crystal growth inhibitor", Langmuir, (USA), 2002, Vol. 18, p. 10493 to 10495
[NPL 3] "Efficient planar heterojunction perovskite solar cells by vapour deposition", Nature, 2013, Vol. 501, p. 395 to 398

### Summary of Invention

### Technical Problem

### • Regarding Background Art 1

In order to obtain a high performance sDSSC, chemical modification of the surface of the p-type semiconductor microparticles such as the copper iodide crystal is considered as one of important factors. In addition, regardless of use of the sDSSC, in a solar cell including a solid hole transport layer, when the surface of the p-type semiconductor microparticles is chemically modified, it is expected that a function of the p-type semiconductor microparticles will be able to be further improved or expanded. In the conventional method for obtaining microparticles of the p-type semiconductor such as copper iodide by using thiocyanate ions, the thiocyanate ions are bonded to the surface of the p-type semiconductor microparticles. Since a thiocyanate ion has only a cyano group as a functional group which is capable of performing chemical modification, it is difficult to perform various chemical modifications on the surface of the p-type semiconductor microparticles according to the conventional method.

First, an object of the present invention is to provide a crystal growth control agent which is capable of suppressing an increase in a crystal size of a p-type semiconductor, and performing chemical modification on a surface of p-type semiconductor microparticle, a method for forming p-type semiconductor microparticles or a p-type semiconductor microparticle film by using the crystal growth control agent, a composition for forming a hole transport layer of a solar cell, and a solar cell using the composition for forming a hole transport layer (Object 1).

### • Regarding Background Art 2

The present inventors have conducted and found that in the case where an organic salt containing an anion other than a thiocyanate ion is used, the p-type semiconductor is not crystalized.

Second, an object of the present invention is to provide a composition for forming a hole transport layer which is capable of prompting crystallization and fine pulverization of the p-type semiconductor and performing chemical modification on the surface of the p-type semiconductor microparticles even in the case where an organic salt (an ionic liquid) containing an anion other than a thiocyanate ion is used, and a solar cell using the composition for forming a hole transport layer (Object 2).

### Solution to Problem

First, the present inventors have completed the present invention by finding out that the above-described Object 1 is realized by using a sulfur-containing compound having a functional group which is capable of being firmly bonded to the p-type semiconductor and performing chemical modification.

According to a first aspect of Embodiment 1 of the present invention, there is provided a crystal growth control agent which controls crystal growth of p-type semiconductor and contains at least one of sulfur-containing compounds (except for thiocyanate) selected from the group consisting of a compound, which generates a thiolate anion due to dissociation of a proton or a cation, and a disulfide compound.

According to a second aspect of Embodiment 1 of the present invention, there is provided a method for forming p-type semiconductor microparticles or a p-type semiconductor microparticle film, including a step of crystallizing a p-type semiconductor in the presence of the crystal growth control agent.

According to a third aspect of Embodiment 1 of the present invention, there is provided a composition for forming a hole transport layer of a solar cell, which contains a p-type semiconductor and the crystal growth control agent.

According to a fourth aspect of Embodiment 1 of the present invention, there is provided a solar cell including a photoelectric conversion layer and a hole transport layer which is formed of the composition 1 for forming a hole transport layer between a conductive substrate and a counter electrode layer.

According to a fifth aspect of Embodiment 1 of the present invention, there is provided a solar cell (hereinafter, referred to as a "sensitized solar cell") including a conductive substrate; a photoelectric conversion layer which is provided on the conductive substrate and includes a porous n-type semiconductor having holes and a sensitized material adsorbed on the porous n-type semiconductor; a hole transport layer which is provided on the photoelectric conversion layer, is formed of the composition for forming a hole transport layer, and with which at least some of the holes are filled; and a counter electrode layer which is provided on the hole transport layer.

Second, the present inventors have completed the present invention by finding out that when a sulfur-containing compound having a functional group which is capable of being firmly bonded to the p-type semiconductor and performing chemical modification is used, the crystallization of the p-type semiconductor is prompted even in the case where an organic salt containing an anion other than a thiocyanate ion is used, and thereby the above-described Object 2 is realized. Further, even in the case where an organic salt containing a thiocyanate ion as an anion is used, the sulfur-containing compound bonds to the p-type semiconductor, and thus it is possible to perform various chemical modifications on the surface of the p-type semiconductor microparticles.

According to a first aspect of Embodiment 2 of the present invention, there is provided a composition for forming a hole transport layer of a solar cell, which includes a p-type semiconductor; an organic salt; and a crystal growth control agent which controls the crystal growth of the p-type semiconductor and contains at least one of sulfur-containing compounds (except for thiocyanate) selected from the group consisting of a compound, which generates a thiolate anion due to dissociation of a proton or a cation, and a disulfide compound.

According to a second aspect of Embodiment 2 of the present invention, there is provided a solar cell including a photoelectric conversion layer and a hole transport layer which is formed of the composition for forming a hole transport layer between a conductive substrate and a counter electrode layer.

According to a third aspect of Embodiment 2 of the present invention, there is provided a solar cell including a conductive substrate; a photoelectric conversion layer which is provided on the conductive substrate and includes a porous n-type semiconductor having holes and a sensitized material adsorbed on the porous n-type semiconductor; a hole transport layer which is provided on the photoelectric conversion layer, is formed of the composition for forming a hole transport layer, and with which at least some of the holes are filled; and a counter electrode layer which is provided on the hole transport layer.

### Advantageous Effects of Invention

First, according to the present invention, it is possible to provide a crystal growth control agent which is capable of suppressing an increase in a crystal size of a p-type semiconductor, and performing chemical modification on a surface of p-type semiconductor microparticles, a method for forming p-type semiconductor microparticles or a p-type semiconductor microparticle film by using the crystal growth control agent, a composition for forming a hole transport layer of a solar cell, and a solar cell using the composition for forming a hole transport layer.

Second, according to the present invention, it is possible to provide a composition for forming a hole transport layer which is capable of prompting crystallization of the p-type semiconductor and performing chemical modification on the surface of the p-type semiconductor microparticles even in the case where an organic salt containing an anion other than the thiocyanate ion is used, and a solar cell using the composition for forming a hole transport layer.

### Brief Description of Drawings

Fig. 1 is a longitudinal sectional view illustrating a solar cell (sensitized solar cell) according to a fifth aspect of Embodiment 1 of the present invention, or a solar cell (sensitized solar cell) according to a third aspect of Embodiment 2 of the present invention.
Fig. 2 is a graph illustrating a relationship of a concentration of a crystal growth control agent and an amount of dyes separated from a dye-adsorbed porous titanium dioxide substrate.

### Description of Embodiments

Hereinafter, Embodiment 1 of the present invention will be described in detail.

### <Crystal growth control agent>

The crystal growth control agent according to the present invention contains at least one of sulfur-containing compounds (except for thiocyanate) selected from the group consisting of a compound, which generates a thiolate anion (-S-) due to dissociation of a proton or a cation, and a disulfide compound, and controls the crystal growth of the p-type semiconductor. Since the thiolate anion is coordinated on the surface of the p-type semiconductor so as to surround the p-type semiconductor, the crystal growth is less likely to be caused on the surface of the p-type semiconductor, and thus an increase in a crystal size is suppressed. In addition, the disulfide compound generates the thiolate anion due to the cleavage of disulfide bond, and thus the increase in the crystal size is suppressed as described above. Further, when a functional group contained in the crystal growth control agent is properly selected, it is possible to perform chemical modification in accordance with the functional group on the surface of the p-type semiconductor by utilizing the crystal growth control agent which is coordinated on the surface of the p-type semiconductor.

The sulfur-containing compound is not particularly limited as long as the sulfur-containing compound is at least one sulfur-containing compound selected from the group consisting of a compound, which generates a thiolate anion due to dissociation of a proton or a cation, and a disulfide compound, and is other than a thiocyanate. Among the sulfur-containing compounds, examples of the compound generating the thiolate anion due to dissociation of a proton or a cation include a thiol compound, a dithiocarboxylate compound, a dithiocarbamate compound, a thioamide compound or a tautomer thereof, and a thiourea compound or the tautomer thereof. The sulfur-containing compound may be used alone or two or more types thereof may be used in combination.

Examples of the thiol compound include those expressed by the following formula (1) :

R¹ - SH (1)

wherein R¹ represents a monovalent hydrocarbon group which may have a substituent.

Examples of R¹ include an alkyl group which may have a substituent, and has 1 to 20 carbon atoms, preferably has 1 to 10 carbon atoms, and more preferably has 1 to 6 carbon atoms, an alkenyl group which may have a substituent, and has 1 to 20 carbon atoms, preferably has 1 to 10 carbon atoms, and more preferably has 1 to 6 carbon atoms, an aryl group which may have a substituent, and has 6 to 20 carbon atoms, preferably has 6 to 10 carbon atoms, and more preferably has 6 to 8 carbon atoms, an aralkyl group which may have a substituent, and has 7 to 20 carbon atoms, preferably has 7 to 10 carbon atoms, and more preferably has 7 to 8 carbon atoms, an alkyl aryl group which may have a substituent, and has 7 to 20 carbon atoms, preferably has 7 to 10 carbon atoms, and more preferably has 7 to 8 carbon atoms. Examples of the substituent include a hydroxyl group, a thiol group, a carboxyl group, and an amino group. In the case where R¹ has the substituent, the number of the substituent may be one or more.

Specific examples of the thiol compound include an aliphatic thiol compound such as thioglycerol, 2-mercaptoethanol, a thioglycolic acid, 2,3-dimercapto-1-propanol, 1-propanethiol, 2-propanethiol, 2-methyl-2-propanethiol, 1,2-ethanedithiol, cyclohexane thiol, and octanethiol, and an aromatic thiol compound such as thiophenol, p-toluene thiol, and amino benzene thiol.

Examples of the dithiocarboxylate compound include those expressed by the following formula (2-1) or (2-2).

R² - CS - S - X⁺ (2-1)

(R^{2A})⁺ - CS - S⁻ (2-2)

In formula (2-1), R² represents a hydrogen atom or a monovalent hydrocarbon group or an alkoxy group which may have a substituent, X⁺ represents a cation (for example, H⁺, Li⁺, Na⁺ or K⁺) belonging to a group I element or an ammonium ion expressed by the following formula (3). In formula (2-2), (R^{2A})⁺ represents a monovalent organic group having N⁺.

N⁺R³₄ (3)

In the formula, R³ each independently represents a hydrogen atom or a monovalent hydrocarbon group which may have a substituent, with the proviso that at least one of R³ is a monovalent hydrocarbon group which may have a substituent.

In the case where R² is the monovalent hydrocarbon group which may have a substituent, examples of R² include groups exemplified as R¹. Examples of the substituent and the number thereof are as described above. In the case where R² is the alkoxy group, examples of R² include the alkoxy group having 1 to 6 carbon atoms.

In the case where R³ is the monovalent hydrocarbon group which may have a substituent, examples of R³ include groups exemplified as R¹. Examples of the substituent and the number thereof are as described above.

Examples of (R^{2A})⁺ include a heterocyclic group having N⁺ such as an imidazolidinium ring-containing monovalent hydrocarbon group, a quinolinium ring-containing monovalent hydrocarbon group, a pyridinium ring-containing monovalent hydrocarbon group, and a piperazinium group-containing monovalent hydrocarbon group.

Specific examples of a dithiocarboxylic acid compound include a salt of 2-dithio naphthoate and the alkyl ammonium ion of the above-described formula (3), a salt of 2,6-difluorobenzene carbo dithionate and the alkyl ammonium ion of the above-described formula (3), Nsc160482, Nsc273908, and Nsc273909, and in the case where R² is a compound having an alkoxy group, examples thereof include sodium ethylxanthate, potassium isopropylxanthate, potassium butylxanthate, and potassium amylxanthate.

Examples of the dithiocarbamate compound include those expressed by the following formula (4):

(R²₂N - CS - S⁻)ₙX^{m+} (4)

wherein R² is as described above, R²s may be the same as each other or may be different from each other, n and m represent a valence, with the proviso that an expression of n = m is established, and X^{m+} represents a cation of a valence m.

R² in formula (4) is preferably a monovalent hydrocarbon group which may have a substituent, and the monovalent hydrocarbon group which may have a substituent is as described above. In the case where m is 1, examples of X^{m+} (that is, X⁺) include the same as those as described above. In the case where m is 2 or more, such a metal ion may be selected arbitrarily.

Specific examples of the dithiocarbamate compound include a salt (particularly, diethyl ammonium diethyl dithiocarbamate) of a diethyl dithiocarbamate and the ammonium ion of the above-described formula (3), a salt of a 1-pyrrolidinecarbo dithioate and the alkyl ammonium ion of the above-described formula (3), a salt of dibenzyl dithiocarbamate and the alkyl ammonium ion of the above-described formula (3), a salt of a dimethyl dithiocarbamate and the alkyl ammonium ion of the above-described formula (3), and a salt of dibutyl dithiocarbamate and the alkyl ammonium ion of the above-described formula (3). In addition, as the dithiocarbamic acid compound, it is possible to use a salt of a univalent, bivalent, or trivalent metal ion. Examples thereof include sodium diethyl dithiocarbamate, silver diethyl dithiocarbamate, copper diethyl dithiocarbamate, zinc diethyl dithiocarbamate, iron diethyl dithiocarbamiate, and nickel dibutyl dithiocarbamate.

Examples of the thioamide compound include those expressed by the following formula (5):

R² - CS - NHR² (5)

wherein R²s are as described above, may be the same as each other or different from each other, and may be bonded to each other to form a ring.

The thioamide compound of the above-described formula (5) is deprotonated, and the deprotonated body has resonance structures of which one contains the thiolate anion as described below.

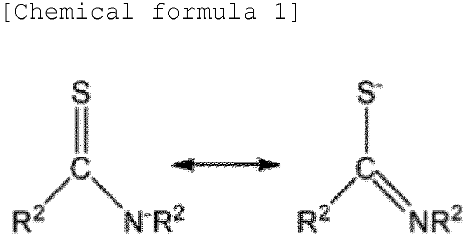

Specific examples of the thioamide compound include thioacetamide, thiobenzamide, thio isonicotinamide, 2-piperidinethione, 2-pyrrolidinethione, and N-phenyl propane thioamide.

Examples of the tautomer of the thioamide compound include those expressed by the following formula (6):

R² - C(SH) = NR² (6)

wherein R²s may be the same as each other or different from each other, and may be bonded to each other to form a ring.

Examples of the thiourea compound include those expressed by the following formula (7):

R²NH - CS - NHR² (7)

wherein R²s may be the same as each other or different from each other, and may be bonded to each other to form a ring.

The thiourea compound of the above-described formula (7) is deprotonated, and the deprotonated form is as described below, and has one of the resonance structure has thiolate anion.

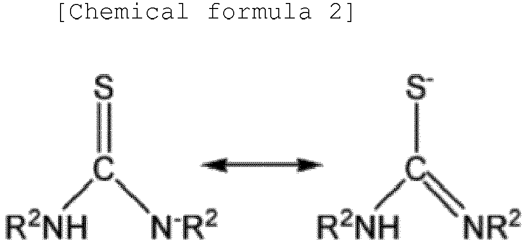

Specific examples of the thiourea compound include thiourea, 1,3-dibutyl-2-thiourea, 1,3-dimethyl thiourea, 1,3-diethyl-2-thiourea, 1,3-diisopropyl-2-thiourea, 2-imidazolidinethione, 1,3-dimethyl thiourea, trimethyl thiourea, ethylene thiourea, 1,3-di(p-tolyl)thiourea, 2-thiouracil, and dithio pyrimidine.

Examples of the tautomer of the thiourea compound include those expressed by the following formula (8):

R²NH - C(SH) = NR² (8)

wherein R²s may be the same as each other or different from each other, and may be bonded to each other to form a ring.

Examples of the disulfide compound include those expressed by the following formula (9):

R² - S - S - R² (9)

wherein R²s may be the same as each other or different from each other.

Specific examples of the disulfide compound include a linear or branched alkyl disulfide having 1 to 10 carbon atoms, diallyl disulfide, cyclohexyl disulfide, phenyl disulfide, benzyl disulfide, p-tolyl disulfide, p-dichlorodiphenyl sulfide, di(3,4-dichlorophenyl) disulfide, 2,2'-dithiobis(5-chloroaniline), 4,4'-dithiopyridine, 2,2'-dithiopyridine, 2,4-xylyl disulfide, 2,3-xylyl disulfide, 3,5-xylyl disulfide, 2,4-xylyl, 2,6-xylyl disulfide, 2,2'-dithio salicylate, and 2,2'-dithiobis(4-tert-butyl phenol).

### [p-Type semiconductor]

The p-type semiconductor is not particularly limited. For example, examples thereof include a compound semiconductor containing copper, and a compound semiconductor containing monovalent copper is preferably used. Specific examples of the p-type semiconductor include copper iodide and copper thiocyanate, and copper iodide is preferably used in terms of conductivity, ionization potential, and diffusion length. Note that, it is assumed that the copper iodide is contained in a solid solution obtained by substituting a portion of iodine with chlorine or bromine at an arbitrary ratio. The p-type semiconductor may be used alone or two or more types thereof may be used in combination.

### <Method for forming p-type semiconductor microparticles or p-type semiconductor microparticle film>

The method for forming the p-type semiconductor microparticles or the p-type semiconductor microparticle film according to the present invention includes a step of crystallizing the p-type semiconductor in the presence of a crystal growth control agent of the present invention. Specifically, it is possible to form the p-type semiconductor microparticles or the p-type semiconductor microparticle film by evaporating an organic solvent from a solution containing the organic solvent, a crystal growth control agent which is dissolved in the organic solvent, and the p-type semiconductor so as to crystallize the p-type semiconductor. Examples of the organic solvent include acetonitrile, methoxy acetonitrile, a nitrogen-containing solvent such as methoxy propionitrile, pyridine, γ-butyrolactone, a lactone-based solvent such as valerolactone, ethylene carbonate, a carbonate-based solvent such as propylene carbonate, and a sulfide-based solvent such as di-n-propyl sulfide, and the nitrile-based solvent such as acetonitrile is preferably used. Each of the respective crystal growth control agent, the p-type semiconductor, and the organic solvent may be used alone or two or more types thereof may be used in combination.

The p-type semiconductor microparticles formed by using the forming method of the present invention or the p-type semiconductor microparticles in the p-type semiconductor microparticle film formed by using the forming method of the present invention have very small particle sizes measured by using a scanning electron microscope (SEM) image. The particle size is preferably 1 to 3,000 nm, and is more preferably in a rage of 5 to 100 nm. The p-type semiconductor microparticles can be preferably used in forming a flat p-type semiconductor layer in the solar cell, and filling the hole of the porous n-type semiconductor which is used for the sensitized solar cell such as a fully solid dye-sensitized solar cell and a quantum dot-sensitized solar cell. Even in the case where a flat film is prepared, it is possible to form a copper iodide film having small surface roughness by using the crystal growth control agent as compared with the case where the crystal growth control agent is not added. Note that, the p-type semiconductor microparticles in the p-type semiconductor microparticle film which are formed by using the forming method of the present invention also have very small particle size. The particle size obtained by measuring from a scanning electron microscope (SEM) image is preferably 1 to 3,000 nm, and more preferably 5 to 100 nm.

In the above-described forming method, it is possible to crystallize the p-type semiconductor in holes of a porous n-type semiconductor such that at least some of the holes are filled with the p-type semiconductor. Specifically, a solution containing an organic solvent, a crystal growth control agent which is dissolved in the organic solvent, and the p-type semiconductor are immersed into the porous n-type semiconductor, and the organic solvent is evaporated from the solution so as to crystallize the p-type semiconductor in the holes, and thereby at least some of the holes can be filled with the p-type semiconductor.

### [n-Type semiconductor]

The n-type semiconductor is not particularly limited; however, examples thereof include a metal oxide semiconductor. Specific examples of the n-type semiconductor include TiO₂, SnO₂, ZnO, Nb₂O₅, and In₂O₃. TiO₂ or ZnO is preferably used in terms of the efficiency of charge separation. The n-type semiconductor may be used alone or two or more types thereof may be used in combination. Note that, in the case of the sensitized solar cell such as the fully solid dye-sensitized solar cell and the quantum dot-sensitized solar cell, the porous n-type semiconductor is preferably used as the n-type semiconductor, and the diameter of the hole of the porous n-type semiconductor is 5 nm to 1,000 nm on average, and is preferably 10 nm to 500 nm.

### <Composition 1 for forming hole transport layer>

The composition 1 for forming a hole transport layer of the solar cell according to the present invention contains the p-type semiconductor and the crystal growth control agent of the present invention. It is possible to form a hole transport layer of the solar cell from the composition 1 for forming a hole transport layer of the present invention. Each of the p-type semiconductor and the crystal growth control agent is as described above, and may be used alone or two or more types thereof may be used in combination.

In the composition 1 of the present invention, the content of the crystal growth control agent is not particularly limited as long as it is an effective amount which is capable of suppressing the crystal growth of the p-type semiconductor. For example, the content is preferably 0.00001 to 15 parts by weight with respect to 100 parts by weight of p-type semiconductor.

The composition 1 of the present invention is typically used in a state of including an organic solvent. Examples of the organic solvent include those exemplified as described above. In the composition 1 of the present invention containing the organic solvent, a concentration of the crystal growth control agent is preferably 0.01 to 20 mM, and is more preferably 0.1 to 15 mM. Note that, in the case where the crystal growth control agent is used without containing the organic solvent, the content of the crystal growth control agent is 0.002 to 10 parts by weight, with respect to 100 parts by weight of p-type semiconductor.

A composition 1 for forming a hole transport layer of the present invention may contain an organic salt (an ionic liquid) and the like, as other components. The content of the organic salt in the entire composition 1 for forming a hole transport layer is preferably 0 to 10% by weight, is more preferably 0 to 1% by weight, and is still preferably 0% by weight.

### <Solar cell>

The solar cell according to the fourth aspect of Embodiment 1 of the present invention is a solar cell which is provided with a photoelectric conversion layer and a hole transport layer which is formed of the composition 1 for forming a hole transport layer between a conductive substrate and a counter electrode layer. Examples of the solar cell include a sensitized solar cell such as a fully solid dye-sensitized solar cell and a quantum dot-sensitized solar cell; and an organic thin film-type solar cell; and a perovskite solar cell. Among these, first, the organic thin film-type solar cell and the perovskite solar cell will be described. The sensitized solar cell will be described later.

Examples of the organic thin film-type solar cell and the perovskite solar cell include a solar cell which is provided with a conductive substrate, an n-type semiconductor layer including an n-type semiconductor which is provided on the conductive substrate, a photoelectric conversion layer which is provided on the n-type semiconductor layer, a p-type semiconductor layer (a hole transport layer) which is provided on the photoelectric conversion layer, and a counter electrode layer which is provided on the p-type semiconductor layer, in which the p-type semiconductor layer is formed of the composition 1 for forming a hole transport layer of the present invention. Such a solar cell is further provided with a supporting substrate on the major surface, among the major surfaces of the conductive substrate, on the side opposite to the major surface which is in contact with an n-type semiconductor layer, and may be provided with a supporting substrate on the major surface, among the major surfaces of the counter electrode layer, on the side opposite to the major surface which is in contact with a p-type semiconductor layer. The description regarding the conductive substrate, the counter electrode layer, and the supporting substrate among the above components is the same as description regarding

### <Sensitized solar cell> which is will be described below.

### [n-Type semiconductor layer]

The n-type semiconductor layer is provided on the conductive substrate, and is formed of the n-type semiconductor. The n-type semiconductor is as described above in section of [n-type semiconductor].

The thickness of the n-type semiconductor layer is preferably 10 nm to 30 µm.

### [Photoelectric conversion layer]

The photoelectric conversion layer is a solid-type layer in which optical energy is converted into electrical energy. In the case of the perovskite solar cell, examples of a material of the photoelectric conversion layer include organic-inorganic hybrid-based perovskite (for example, lead halide perovskite).

The photoelectric conversion layer is provided on the n-type semiconductor layer, and can be formed by using a known method such as a deposition method and a solution method (a dropping method or a coating method). The thickness of the photoelectric conversion layer is preferably 10 to 2,000 nm.

### [p-Type semiconductor layer]

The p-type semiconductor layer is provided on the photoelectric conversion layer, and is formed of the composition 1 for forming a hole transport layer of the present invention. The p-type semiconductor is as described above in section of [p-type semiconductor].

The thickness of the p-type semiconductor layer is preferably 100 to 3,000 nm.

The p-type semiconductor layer can be formed on the photoelectric conversion layer by using the composition 1 for forming a hole transport layer of the present invention through a known method such as a deposition method and a coating method. In the case of using the coating method, the composition 1 for forming a hole transport layer preferably contains an organic solvent.

### <Sensitized solar cell>

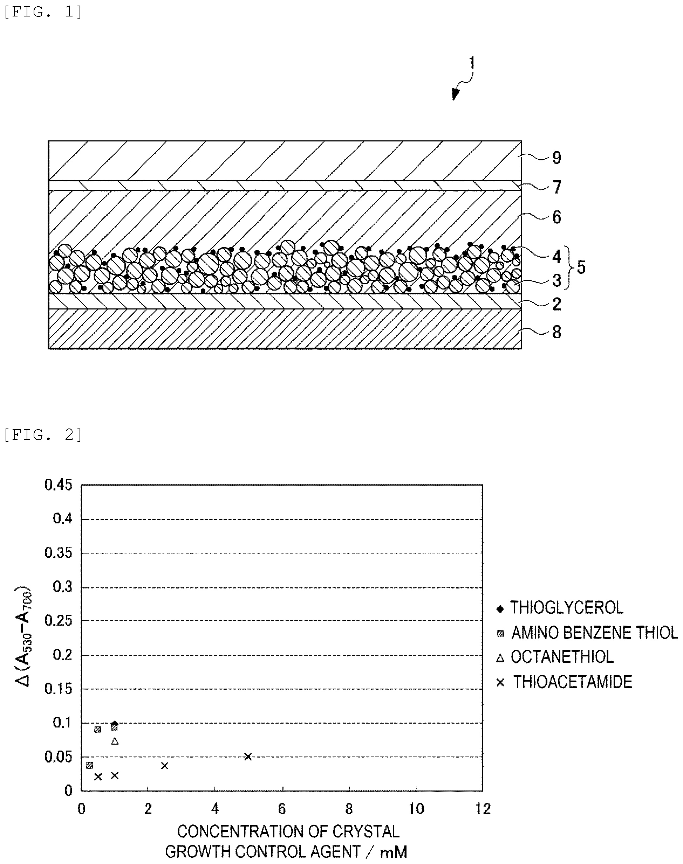

Hereinafter, the sensitized solar cell according to the invention will be specifically described with reference to Fig. 1. Fig. 1 is a longitudinal sectional view illustrating the sensitized solar cell according to the fifth aspect of Embodiment 1 of the present invention, or the sensitized solar cell according to the third aspect of Embodiment 2 of the present invention. A sensitized solar cell 1 according to the fifth aspect of Embodiment 1 of the present invention is provided with a conductive substrate 2, a photoelectric conversion layer 5 which is provided on the conductive substrate 2, and includes a porous n-type semiconductor 3 having holes and a sensitized material 4 adsorbed on the porous n-type semiconductor 3, a hole transport layer 6 which is provided on the photoelectric conversion layer 5, and with which at least some of the holes are filled, and a counter electrode layer 7 which is provided on the hole transport layer 6, in which the hole transport layer 6 is formed of the composition 1 for forming a hole transport layer of the present invention. The sensitized solar cell 1 is further provided with a supporting substrate 8 on the major surface, among the major surfaces of the conductive substrate 2, on the side opposite to the major surface which is in contact with a photoelectric conversion layer 5, and is provided with a supporting substrate 9 on the major surface, among the major surfaces of a counter electrode layer 7, on the side opposite to the major surface which is in contact with a hole transport layer 6.

### [Conductive substrate]

The conductive substrate 2 is a substrate formed of a conductive material. Examples of the conductive material include metal such as platinum and gold, carbon, and a conductive metal oxide such as a fluorine doped tin oxide (FTO) and an indium tin oxide (ITO). Examples of the supporting substrate 8 include a glass substrate and a plastic substrate. Examples of the plastic substrate include a polyethylene terephthalate (PET) substrate. Both of the conductive substrate 2 and the supporting substrate 8 are transparent.

The thickness of the conductive substrate 2 is preferably 100 nm to 2 µm. In addition, the thickness of the supporting substrate 8 is preferably 1 µm to 3 mm.

The conductive substrate 2 can be obtained by molding the conductive material into a plate-like shape. For example, the conductive substrate 2 can be obtained by stacking the conductive materials on the supporting substrate 8.

Note that, in the case where it is possible to obtain sufficient strength only with the conductive substrate 2, it is not necessary to provide the supporting substrate 8.

### [Photoelectric conversion layer]

The photoelectric conversion layer 5 which is provided on the conductive substrate 2 includes the porous n-type semiconductor 3 having the holes and the sensitized material 4 which is adsorbed on the porous n-type semiconductor 3. The porous n-type semiconductor 3 is as described above in section of [n-type semiconductor].

The thickness of the photoelectric conversion layer 5 is preferably 100 nm to 30 µm.

In the case where the sensitized solar cell 1 is the fully solid dye-sensitized solar cell, a dye is used as the sensitized material 4 adsorbed on the porous n-type semiconductor 3. The dye used as the sensitized material 4 is not particularly limited as long as it is used as the dye-sensitized solar cell. Examples of the dye include an organic metal complex dye, a methine dye, a porphyrin-based dye, and a phthalocyanine-based dye, which are disclosed in PTL 1; an organic pigment such as a phthalocyanine-based pigment, an azo-based pigment, an anthraquinone pigment, an azomethine-based pigment, a quinophthalone-based pigment, an isoindoline-based pigment, a nitroso-based pigment, a perinone-based pigment, a quinacridone-based pigment, a perylene-based pigment, a pyrrolopyrrole-based pigment, and a dioxazine-based pigment; an inorganic pigment such as a carbon-based pigment, a chromic acid salt-based pigment, a sulfide-based pigment, an oxide-based pigment, a hydroxide-based pigment, a ferrocyanide-based pigment, a silicate-based pigment, and a phosphate-based pigment; a cyan-based dye, a xanthene-based dye, an azo-based dye, a hibiscus dye, a blackberry dye, a raspberry dye, a pomegranate juice dye, and a chlorophyll dye, which are disclosed in PTL 2; and organic dye molecules expressed by the following formula disclosed in Japanese Unexamined Patent Application, Publication No. 2011-204789. The dyes may be used alone or two or more types thereof may be used in combination. 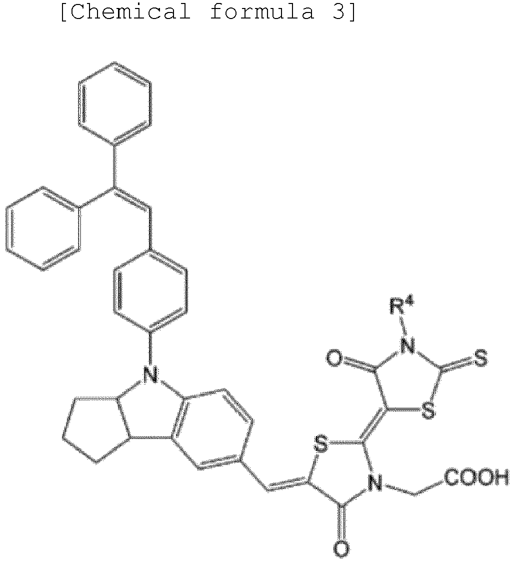 In the formula, R⁴ represents a monovalent hydrocarbon group which may have a substituent.

Examples of R⁴ include groups exemplified as the R¹. The examples and the number of the substituent are as described above.

In the case where the sensitized solar cell 1 is a quantum dot-sensitized solar cell, examples of the sensitized material 4 which is adsorbed on the porous n-type semiconductor 3 include sulfides such as antimony sulfide, cadmium sulfide, and lead sulfide, and selenides such as lead selenide, and cadmium selenide. In the quantum dot-sensitized solar cell, the sensitized material 4 may be used alone or two or more types thereof may be used in combination.

The sensitized material 4 is described with reference to an example of the case where the sensitized solar cell 1 is the fully solid dye-sensitized solar cell or the quantum dot-sensitized solar cell, in the solar cells which have different sensitizing functions, other sensitized materials are properly selected and adsorbed on the porous n-type semiconductor 3.

The photoelectric conversion layer 5 is obtained in such a manner that the conductive substrate 2 is coated with the porous n-type semiconductor 3, dried, and baked, then, a laminate obtained therefrom is immersed into a solution of the sensitized material 4, the sensitized material 4 is adsorbed on the porous n-type semiconductor 3, and then unnecessary sensitized material 4 is removed.

### [Hole transport layer]

The hole transport layer 6, which is provided on the photoelectric conversion layer 5, and with which at least some of the holes are filled, is formed of the composition 1 for forming a hole transport layer of the present invention. The p-type semiconductor included in the hole transport layer is as described above in the section of [p-type semiconductor]. The thickness of the hole transport layer 6 is preferably 100 to 3,000 nm.

The hole transport layer 6 is provided on the photoelectric conversion layer 5 by dividing a predetermined amount of the composition 1 for forming a hole transport layer of the present invention which contains the organic solvent into a predetermined number of times so as to repeatedly perform an operation that the predetermined amount of the composition 1 is added dropwise onto the photoelectric conversion layer 5 and dried, and thus at least some of the holes of the porous n-type semiconductor 3 are filled with the hole transport layer 6.

### [Counter electrode layer]

The counter electrode layer 7 is provided on the hole transport layer 6. Examples of materials of the counter electrode layer 7 include metal such as platinum and gold, carbon, and a conductive metal oxide such as a fluorine doped tin oxide (FTO) and an indium tin oxide (ITO). The counter electrode layer 7 may be transparent.

The thickness of the counter electrode layer 7 is not particularly limited, but is preferably, for example, 15 µm.

In the case where a material of the counter electrode layer 7 is metal, the counter electrode layer 7 can be formed by vacuum depositing the metal or bonding foil of the metal onto the hole transport layer 6, and in the case where the material of the counter electrode layer 7 is a conductive metal oxide, the counter electrode layer 7 can be formed by forming a film of the conductive metal oxide by using a sputtering method, a MOCVD method, or the like, or by coating the hole transport layer 6 with the conductive metal oxide and drying the hole transport layer 6.

The material and thickness of the supporting substrate 9 are the same as those of the supporting substrate 8. The supporting substrate 9 may be transparent. Note that, in the case where it is possible to obtain sufficient strength only by the counter electrode layer 7, it is not necessary to provide the supporting substrate 9.

Hereinafter, Embodiment 2 of the present invention will be specifically described.

### <Composition 2 for forming hole transport layer>

According to the present invention, there is provided a composition 2 for forming a hole transport layer of solar cell which includes a p-type semiconductor; an organic salt; and a crystal growth control agent which contains at least one of sulfur-containing compounds (except for thiocyanate) selected from the group consisting of a compound, which generates a thiolate anion due to dissociation of a proton or a cation, and a disulfide compound, and controls the crystal growth of the p-type semiconductor. It is possible to form the hole transport layer of the solar cell from the composition 2 for forming a hole transport layer of the present invention.

### [p-Type semiconductor]

The p-type semiconductor is as described above.

### [Organic salt]

The organic salt is referred to as an ionic liquid in some cases. The organic salt is not particularly limited, and well-known materials can be used.

Examples of the cation contained in the organic salt include an imidazolium ion such as a 1-ethyl-3-methyl imidazolium ion, a 1-methyl-3-propyl imidazolium ion, a 1-methyl-3-octyl imidazolium ion, a 1-methyl-3-perfluorooctyl imidazolium ion, a 1-butyl-3-methyl imidazolium ion, a 1-hexyl-3-methyl imidazolium ion, a 1-dodecyl-3-methyl imidazolium ion, a 1-allyl-3-methyl imidazolium ion, a 1-benzyl-3-methyl imidazolium ion, a 1-butyl-l-perfluorooctyl imidazolium ion, a 1,3-dimethyl-imidazolium ion, a 1,2,3-trimethyl imidazolium ion, a 1,2-dimethyl-3-propyl imidazolium ion, a 1-ethyl-2, 3-dimethyl imidazolium ion, a 1-butyl-2,3-dimethyl imidazolium ion, and a 1-methyl-imidazolium ion; an ammonium ion such as a tributyl methyl ammonium ion, a tetraethyl ammonium ion, a tetrabutyl ammonium ion, a tetrapentyl ammonium ion, a tetrahexyl ammonium ion, a tetraheptyl ammonium ion, a tetraoctyl ammonium ion, and a methyl-trioctyl ammonium ion; a phosphonium ion such as a tetrabutyl phosphonium ion, a tributyl hexadecyl phosphonium ion, and a trihexyl tetradecyl phosphonium ion; a pyridinium ion such as a 1-butyl pyridinium ion, a 3-methyl-1-propyl pyridinium ion, a 1-butyl-3-methyl pyridinium ion, and a 1-butyl-4-methyl pyridinium ion; a pyrrolidinium ion such as a 1-methyl-1-propyl pyrrolidinium ion, a 1-ethyl-1-methyl pyrrolidinium ion, and a 1-butyl-1-methyl pyrrolidinium ion; a 1-methyl-1-propyl piperidinium ion; and a triethyl sulfonium ion. Among them, the 1-ethyl-3-methyl imidazolium ion, the 1-butyl-3-methyl imidazolium ion, the 1-hexyl-3-methyl imidazolium ion, and the tributyl methyl ammonium ion are preferably used.

Examples of the anion contained in the organic salt include a dicyanamide ion, a fluoride ion, a chloride ion, a bromide ion, an iodide ion, a thiocyanate ion, a methanesulfonate ion, a tetrachloroaluminate ion, an acetate ion, a nitrate ion, a benzoate ion, a tosylate ion, a decanoate ion, a methyl sulfate ion, an ethyl sulfate ion, an octyl sulfate ion, a hydrogen sulfate ion, a 2-(2-methoxyethoxy) ethyl sulfate ion, a tetrafluoroborate ion, a trifluoromethane sulfonate ion, a perfluorobutane sulfonate ion, a perfluorooctane sulfonate ion, a trifluoroacetate ion, a hexafluorophosphate ion, a bis(trifluoromethyl sulfonyl) amide ion, a bis(pentafluoroethyl sulfonyl) imide ion, a bis(trifluoromethyl sulfonyl) imide ion, a tris(trifluoromethyl sulfonyl) methide ion, a bis(2,4,4-trimethyl pentyl) phosphinate ion, a hexafluorophosphate ion, a tetrachloro ferrate(III) ion, a tetracyanoborate anion, and [B(CF₃)4]⁻. Among them, the bromide ion, the chloride ion, the iodide ion, the dicyanamide ion, and the hexafluorophosphate ion are preferably used, and the bromide ion, the chloride ion, the iodide ion, and the dicyanamide ion are more preferably used.

Examples of the organic salt include those of which a melting point is less than 200°C at 1 atm. Specific examples of the organic salt include 1-ethyl-3-methyl imidazolium dicyanamide, 1-ethyl-3-methyl imidazolium bis(trifluoromethyl sulfonyl) imide, 1-ethyl-3-methyl imidazolium chloride, 1-ethyl-3-methyl imidazolium iodide, 1-ethyl-3-methyl imidazolium bromide, 1-ethyl-3-methyl imidazolium phosphate, 1-butyl-3-methyl imidazolium dicyanamide, 1-butyl-3-methyl imidazolium chloride, 1-butyl-3-methyl imidazolium iodide, 1-butyl-3-methyl imidazolium bromide, 1-hexyl-3-methyl imidazolium dicyanamide, 1-hexyl-3-methyl imidazolium chloride, 1-hexyl-3-methyl imidazolium iodide, 1-hexyl-3-methyl imidazolium bromide, tributyl methyl ammonium dicyanamide, tributyl methyl ammonium chloride, tributyl methyl ammonium iodide, tributyl methyl ammonium bromide, and tributyl methyl ammonium bis(trifluoromethyl sulfonyl) imide.

In the composition 2 of the present invention, the content of the organic salt is not particularly limited. For example, the content is preferably 1 to 25 parts by weight with respect to the p-type semiconductor 100 parts by weight.

### [Crystal growth control agent]

The crystal growth control agent according to the present invention contains at least one of sulfur-containing compounds (except for thiocyanate) selected from the group consisting of a compound, which generates a thiolate anion (-S-) due to dissociation of a proton or a cation, and a disulfide compound, and controls the crystal growth of the p-type semiconductor.

It is considered that in the case where the p-type semiconductor solution which contains the organic salt having the anion other than the thiocyanate ion is added dropwise onto the photoelectric conversion layer containing the porous n-type semiconductor, and then dried, the p-type semiconductor remains in the pore of the porous n-type semiconductor in a stated of being dissolved in the organic salt. At this time, it is considered that when the crystal growth control agent exists in the solution, the thiolate anion of the crystal growth control agent is coordinated on the p-type semiconductor during a process of drying so as to form a complex, and the solubility of the p-type semiconductor in the organic salt is deteriorated, and thus of the p-type semiconductor is crystallized. In addition, the thiolate anion is coordinated on the surface of the crystallized p-type semiconductor so as to surround the p-type semiconductor, the crystal growth is less likely to be caused on the surface of the p-type semiconductor, and thus an increase in a crystal size is suppressed. Further, the disulfide compound generates the thiolate anion due to the cleavage of disulfide bond, and thus the increase in the crystal size is suppressed as described above. Further, when a functional group contained in the crystal growth control agent is properly selected, it is possible to perform chemical modification in accordance with the functional group on the surface of the p-type semiconductor by using the crystal growth control agent which is coordinated on the surface of the p-type semiconductor.

Even in the case where the ionic liquid having the thiocyanate ion is used as the anion, the thiolate anion generated from the crystal growth control agent can be coordinated on the p-type semiconductor, and thus it is possible to perform various chemical modifications on the surface of the p-type semiconductor microparticles.

The sulfur-containing compound, the thiol compound, the dithiocarboxylate compound, the dithiocarbamate compound, the thioamide compound or the tautomer thereof, the thiourea compound or the tautomer thereof, and the disulfide compound are as described above.

In the composition 2 of the present invention, the content of the crystal growth control agent is not particularly limited as long as it is an effective amount which is capable of prompting the crystallization and fine pulverization of the p-type semiconductor. For example, the content is preferably 0.001 to 15 parts by weight with respect to 100 parts by weight of the p-type semiconductor.

The composition 2 of the present invention is typically used in a state of containing the organic solvent. Examples of the organic solvent include a nitrogen-containing solvent such as acetonitrile, methoxy acetonitrile, methoxy propionitrile, and pyridine, a lactone-based solvent such as γ-butyrolactone and valerolactone, a carbonate solvent such as ethylene carbonate and propylene carbonate, and a sulfide-based solvent such as di-n-propyl sulfide, and the nitrile-based solvent such as acetonitrile is preferably used. In the composition 2 of the present invention which contains the organic solvent, a concentration of the organic salt is preferably 0.5 to 20 mM, and is more preferably 1 to 15 mM, and a concentration of the crystal growth control agent is preferably 0.5 to 10 mM, and more preferably 0.7 to 7 mM.

In order to improve the electrical properties of the hole transport layer, other components may be added to the composition 2 of the present invention. For example, in order to improve Voc as the electrical properties, amines such as t-butyl pyridine, pyridine, polyvinyl pyridine, 2-picoline, and 2,6-lutidine; imidazoles such as N-methyl benzimidazole, and N-butyl benzimidazole; and a nitrogen-containing polar compound such as dimethylformamide, and N-methylpyrrolidone may be added. Further, in order to reduce the conduction band of the n-type semiconductor such as TiO₂ (in order to improve Jsc), a salt of the lithium ion or a salt of the sodium ion (lithium iodide, lithium (iso) thiocyanate, sodium (iso) thiocyanate, or the like), or a salt of the guanidinium ion (guanidine iodide, guanidine thiocyanate, N-methyl guanidine thiocyanate, or the like) may be added. In addition, cholic acids such as a cholic acid, a deoxycholic acid, and a chenodeoxycholic acid may be added as a co-adsorbent of a dye described below.

### <Solar cell>

The solar cell according to the second aspect of Embodiment 2 of the present invention and the sensitized solar cell according to the third aspect of Embodiment 2 of the present invention are the same as the solar cell according to the fourth aspect of Embodiment 1 of the present invention and the sensitized solar cell according to the fifth aspect of Embodiment 1 of the present invention except that the composition 2 for forming a hole transport layer is used instead of composition 1 for forming a hole transport layer.

Note that, in Fig. 1, the hole transport layer 6 is provided on the photoelectric conversion layer 5 by dividing a predetermined amount of the composition 2 for forming a hole transport layer of the present invention which contains the organic solvent into a predetermined number of times so as to repeatedly perform an operation that the predetermined amount of the composition 2 is added dropwise onto the photoelectric conversion layer 5 and dried, and thus at least some of the holes of the porous n-type semiconductor 3 are filled with the hole transport layer 6. The p-type semiconductor microparticles which are formed at that time has very small particle, and the particle size obtained by measuring from a scanning electron microscope (SEM) image is preferably 1 to 3,000 nm, and more preferably 5 to 100 nm. The p-type semiconductor microparticles can be preferably used in forming a flat p-type semiconductor layer in the solar cell, filling the holes of the porous n-type semiconductor which is used for the sensitized solar cell such as a fully solid dye-sensitized solar cell and a quantum dot-sensitized solar cell, and the like. Even in the case where a flat film is prepared, it is possible to form a copper iodide film having small surface roughness by using the crystal growth control agent as compared with the case where the crystal growth control agent is not added.

### Examples

Hereinafter, examples of the present invention will be described; however, the scope of the present invention is not limited to the examples.

### • Regarding Embodiment 1

### [Preparation of copper iodide coating liquid]

A copper iodide coating liquid was obtained by dissolving copper iodide in acetonitrile so as to provide a concentration of 0.15 M, and the crystal growth control agent was added and mixed into the obtained solution so as to provide the concentration indicated in Table 1.

### [Create copper iodide-filled porous titanium dioxide substrate: filling porous titanium dioxide with copper iodide]

On an FTO layer of a transparent conductive support formed of a glass substrate (thickness: 1,100 µm) and the FTO layer (thickness: 0.8 µm) covering a major one surface of the glass substrate, titanium dioxide paste is screen printed, dried at 150°C, and then heated in an electric furnace at 450°C. Thus, a porous titanium dioxide substrate having a porous titanium dioxide layer provided on the transparent conductive support was prepared.

The substrate was immersed into an acetonitrile/tert-butyl alcohol solution in which a commercially available indoline dye D149 is dissolved to provide the concentration of 0.4 mM, so that the dye is adsorbed on the porous titanium dioxide. The substrate was washed with acetonitrile to remove unnecessary dyes, and then the substrate was dried to thereby obtain a dye-adsorbed porous titanium dioxide substrate.

10 µL of copper iodide coating liquid was added dropwise onto the dye-adsorbed titanium dioxide substrate while being heated by using a hot plate at 60°C in a nitrogen atmosphere, dried, and then additional 10 µL was added dropwise again. By repeatedly performing such a step, 200 µL of copper iodide coating liquid in total was added dropwise onto the porous titanium dioxide substrate, and dried, and thus, the pores of the porous titanium dioxide were filled with copper iodide, thereby obtaining the copper iodide-filled porous titanium dioxide substrate. The thickness of the copper iodide layer which is stacked on the porous titanium dioxide layer was 1 µm.

### [Evaluation of filling properties of copper iodide with respect to porous titanium dioxide]

The evaluation of filling properties of copper iodide was performed by imaging processing of the scanning electron microscope (SEM) image of a cross section of the copper iodide-filled porous titanium dioxide substrate obtained in the above-description. In a secondary electron image of the cross section of a copper iodide-filled porous titanium dioxide layer which contains the titanium dioxide, due to the difference of the charged state, a copper iodide portion was obtained as a white image and a titanium dioxide portion was obtained as a black image. The fact that the white and black secondary electron images are caused due to the difference of element composition was confirmed by comparing with a backscattered electron image. The obtained secondary electron image (image with 8,000 to 10,000 magnification) was converted into an image having two-gradation of white and black by using an image processing soft Image J (National Institute of Health, USA), then the number of pixels of white portions and black portions was counted, and the ratio of (the number of pixels of white portions)/(the number of pixels of white portions + the number of pixels of black portions) was set as a filling rate of copper iodide. The results are indicated in Table 1 (the filling rate in the case where the crystal growth control agent is not added is set to be 1). The setting of the two-gradation was performed by using an automatic setting function of the above-described soft.

### [Form of surface crystal]

The particle size of the copper iodide crystal on the surface was measured from the SEM image of the surface of the copper iodide-filled porous titanium dioxide substrate obtained described above. The results are indicated in Table 1.

**[Table 1]**

| | Crystal growth control agent | Concentration of crystal growth control agent | Relative filling rate of copper iodide | Form of surface crystal |
|---|---|---|---|---|
| Comparative Example 1-1 | Not added | 0 | 1 | > 5 µm |
| Example 1-1 | Thioglycerol | 10 mM | 2.90 | 50 to 100 nm |
| Example 1-2 | 2-mercaptoethanol | 10 mM | 2.09 | 50 to 100 nm |
| Example 1-3 | Thioglycolic acid | 10 mM | 3.10 | 50 to 100 nm |
| Example 1-4 | 2,3-dimercapto-1-propanol | 10 mM | 2.76 | 50 to 100 nm |
| Example 1-5 | p-toluene thiol | 10 mM | 2.08 | 50 to 100 nm |
| Example 1-6 | Octane thiol | 10 mM | 1.95 | 50 to 100 nm |
| Example 1-7 | Amino benzene thiol | 0.5 mM | 2.55 | 50 to 100 nm |
| Example 1-8 | Amino benzene thiol | 0.25 mM | 1.91 | 50 to 100 nm |
| Example 1-9 | Diethyl dithiocarbamate diethyl ammonium | 10 mM | 1.63 | 1 to 2 µm |
| Example 1-10 | Thioacetamide | 5 mM | 2.63 | 50 to 100 nm |
| Example 1-11 | Thioacetamide | 1 mM | 1.76 | 50 to 100 nm |
| Example 1-12 | Thioacetamide | 0.5 mM | 1.82 | 50 to 100 nm |
| Example 1-13 | 1,3-dibutyl thiourea | 2.5 mM | 2.43 | 50 to 100 nm |
| Example 1-14 | 1,3-dibutyl thiourea | 1 mM | 2.28 | 50 to 100 nm |
| Comparative Example 1-2 | 1-ethyl-3-methyl imidazolium thiocyanate | 10 mM | 2.69 | 50 to 100 nm |
| Comparative Example 1-3 | Dibutyl sulfide | 10 mM | 0.63 | 50 to 100 nm |
| Comparative Example 1-4 | Thiophen | 10 mM | 0.88 | > 5 µm |
| Comparative Example 1-5 | Butyl thiocyanate | 10 mM | 0.79 | > 5 µm |
| Comparative Example 1-6 | Pyridine | 10 mM | 1.42 | > 5 µm |
| Comparative Example 1-7 | Triphenylphosphine | 10 mM | 1.14 | > 5 µm |

As indicated in Table 1, in Examples 1-1 to 1-8 using the thiol compound, Example 1-9 using the dithiocarbamate compound, Examples 1-10 to 1-12 using the thioamide compound, and Examples 1-13 and 1-14 using the thiourea compound, the relative filling rate was increased in a range of 3.1 to 1.6, and the filling rate of copper iodide in the pore of the titanium dioxide was improved as compared with the case where the crystal growth control agent is not added (Comparative Example 1-1). In the case where a thiocyanate-based ionic liquid (Comparative Example 1-2) which had been used to suppress crystal growth of copper iodide was used, 2.69 of relative filling rate was obtained; however, even in the case where the crystal growth control agent of the present invention was used, the same value of the filling rate was obtained (Examples 1-1, 1-3, 1-4, 1-7, 1-10, 1-13, and 1-14). Even with a compound having sulfur in the molecule, the crystal growth control effect and the filling rate of copper iodide in the pore of the titanium dioxide were not improved in thioether (Comparative Examples 1-3 and 1-4) and isothiocyanate (Comparative Example 1-5). Similarly, the crystal growth control effect and the filling rate of copper iodide in the pore of the titanium dioxide were not improved in pyridine (Comparative Example 1-6) and triphenyl phosphine (Comparative Example 1-7) which are other soft bases.

In the copper iodide-filled porous titanium dioxide substrate, a copper iodide layer was formed on the surface of the porous titanium dioxide layer, and the form of the copper iodide crystal on the layer surface was also greatly different depending on the existence of the crystal growth control agent. In the case where the crystal growth control agent was not added, and the case of an additive in which the filling rate was not improved, there was a tendency that a copper iodide crystal having a size which is greater than 5 µm was grown, whereas in the case of the crystal growth control agent in which the filling rate was improved, there was a tendency that the size of the copper iodide crystal on the surface was decreased in a range of approximately 50 to 100 nm. As described above, it was found that the filling rate of the copper iodide was improved when the size of the copper iodide crystal was decreased by the crystal growth control agent.

From the above described results, it was found that the sulfur-containing compound generating the thiolate anion due to dissociation of a proton or a cation, such as the thiol compound, the dithiocarbamate compound, the thiocyanate, the thioamide compound, and the thiourea compound, exhibits the crystal growth control effect.

### [Evaluation of dye separation due to crystal growth control agent]

In the dye-sensitized solar cell, typically, the dye is merely adsorbed on the surface of the n-type semiconductor such as the titanium dioxide in a carboxylic acid site. For this reason, at the time of filling the pores with the copper iodide, it is likely that the crystal growth control agent attacks the carboxylic acid site, and thereby the dye is separated. In this regard, the dye separation due to the crystal growth control agent was evaluated.

The dye-adsorbed porous titanium dioxide substrate obtained in the above description was cut out by 1 cm x 1 cm, the obtained cut substrate was immersed into 10 mL of acetonitrile solution containing the crystal growth control agent having various concentrations, was left to stand for one hour, and then absorbance A₅₃₀ of an acetonitrile solution at 530 nm which is a maximum absorption value of dye D149 was measured. In addition, absorbance A₇₀₀ of the same acetonitrile solution was measured at 700 nm, and the difference of absorbance Δ(A₅₃₀ - A₇₀₀) was calculated based on the A₇₀₀. The results are indicated in Fig. 2.

It was found that in the case where the crystal growth control agent was not added, the absorbance of the acetonitrile solution was almost zero; however, as the concentration of the crystal growth control agent was increased, the absorbance of the acetonitrile solution was increased, and thereby the dye was separated from the dye-adsorbed porous titanium dioxide substrate. In the case where 10 mM of 1-ethyl-3-methyl imidazolium thiocyanate which had been used was used, the absorbance of the acetonitrile solution was 0.107. It was found that in the case where thioglycerol, octane thiol, or amino benzene thiol was used as the crystal growth control agent, if the crystal growth control agent concentration is set to be 1 mM or less, the dye separation is suppressed to the same level as or less than that in the related method. It was found that in the thioacetamide, an inclination of the absorbance with respect to the concentration was smaller than the above described three types of thiols, that is, dye separation performance is low and thus the thioacetamide is preferably used as the crystal growth control agent.

### [Evaluation of solar cell performance]

The performance of the solar cell was evaluated in such a manner that the copper iodide-filled porous titanium dioxide substrate obtained in Comparative Example 1-1 or Example 1-14 was set as a working electrode, and a platinum foil (15 µm) was set as a counter electrode, current-voltage properties under the light irradiation of 1 sun and AM 1.5 were measured by using a potentiostat. The results are indicated by relative values in Table 2 (each of measured values obtained in Comparative Example 1-1 was set to be 1).

**[Table 2]**

| | Comparative Example 1-1 | Example 1-14 |
|---|---|---|
| Eff/% (efficiency) | 1 | 16.4 |
| V_{oc}/ mV (Open Circuit Voltage) | 1 | 1.1 |
| J_{sc/} mA cm⁻² (short circuit current) | 1 | 13.6 |
| FF (fill factor) | 1 | 1.1 |

As understood from Table 2, in Example 1-14 using the crystal growth control agent, efficiency Eff was increased 16.4 4 times, and short circuit current J_{sc} was increased 13.6 times as compared with the case where the crystal growth control agent (Comparative Example 1-1) is not added. As such, it was confirmed that when the crystal growth control agent is used, the improvement of the filling rate caused the improvement of Jsc, and contributed to the improvement of the conversion efficiency.

### • Regarding Embodiment 2

### [Preparation of copper iodide coating liquid]

A copper iodide coating liquid was obtained by dissolving copper iodide in acetonitrile such that the concentration was 0.15 M, and the organic salt and the crystal growth control agent were added and mixed into the obtained solution so as to provide the concentration indicated in Table 3.

**[Table 3]**

| | Organic salt | Concentration of organic salt | Crystal growth control agent | Concentration of crystal growth control agent |
|---|---|---|---|---|
| Comparative Example 2-1 | 1-ethyl-3-methyl imidazolium thiocyanate | 10 mM | Not added | 0 |
| Comparative Example 2-2 | 1-ethyl-3-methyl imidazolium bromide | 10 mM | Not added | 0 |
| Example 2-1 | 1-ethyl-3-methyl imidazolium bromide | 10 mM | Ditolyl disulfide | 1 mM |
| Example 2-2 | 1-ethyl-3-methyl imidazolium bromide | 10 mM | 1,3-dibutyl thiourea | 1 mM |
| Comparative Example 2-3 | 1-ethyl-3-methyl imidazolium chloride | 10 mM | Not added | 0 |
| Example 2-3 | 1-ethyl-3-methyl imidazolium chloride | 10 mM | 1,3-dibutyl thiourea | 1 mM |
| Comparative Example 2-4 | 1-ethyl-3-methyl imidazolium dicyanamide | 10 mM | Not added | 0 |
| Example 2-4 | 1-ethyl-3-methyl imidazolium dicyanamide | 10 mM | 1,3-dibutyl thiourea | 4 mM |
| Comparative Example 2-5 | 1-ethyl-3-methyl imidazolium bis(trifluoromethane sulfonyl) imide | 10 mM | Not added | 0 |
| Example 2-5 | 1-ethyl-3-methyl imidazolium bis(trifluoromethane sulfonyl) imide | 10 mM | 1,3-dibutyl thiourea | 4 mM |
| Comparative Example 2-6 | 1-ethyl-3-methyl imidazolium hexafluorophosphate | 10 mM | Not added | 0 |
| Example 2-6 | 1-ethyl-3-methyl imidazolium hexafluorophosphate | 10 mM | 1,3-dibutyl thiourea | 4 mM |

### [Create copper iodide-filled porous titanium dioxide substrate: filling porous titanium dioxide with copper iodide]

On an FTO layer of a transparent conductive support formed of a glass substrate (thickness: 1,100 µm) and the FTO layer (thickness: 0.8 µm) covering a major one surface of the glass substrate, titanium dioxide paste is screen printed, dried at 150°C, and then heated in an electric furnace at 450°C. Thus, a porous titanium dioxide substrate having a porous titanium dioxide layer provided on the transparent conductive support was prepared.

The substrate was immersed into an acetonitrile/tert-butyl alcohol solution in which a commercially available indoline dye D149 is dissolved to provide the concentration of 0.4 mM, and thus, the dye is adsorbed on the porous titanium dioxide. The substrate was washed with acetonitrile so as to remove unnecessary dyes and then dried to thereby obtain a dye-adsorbed porous titanium dioxide substrate.

10 µL of copper iodide coating liquid was added dropwise onto the dye-adsorbed titanium dioxide substrate while being heated by using a hot plate at 60°C in a nitrogen atmosphere, dried, and then additional 10 µL was added dropwise again. By repeatedly performing such a step, 200 µL of copper iodide coating liquid in total was added dropwise onto the porous titanium dioxide substrate, and dried, and thus, the pores of the porous titanium dioxide were filled with copper iodide, thereby obtaining a copper iodide-filled porous titanium dioxide substrate. The thickness of the copper iodide layer which is stacked on the porous titanium dioxide layer was 1 µm.

### [Evaluation of filling properties of copper iodide with respect to porous titanium dioxide]

The evaluation of filling properties of copper iodide was performed by imaging processing of the scanning electron microscope (SEM) image of a cross section of the above-described copper iodide-filled porous titanium dioxide substrate obtained in Example 2-4 or Comparative Example 2-4, or 2-5. In a secondary electron image of the cross section of a copper iodide-filled porous titanium dioxide layer which contains the titanium dioxide, due to the difference of the charged state, a copper iodide portion was obtained as a white image and a titanium dioxide portion was obtained as a black image. The fact that the white and black secondary electron images are caused due to the difference of element composition was confirmed by comparing with a backscattered electron image. The obtained secondary electron image (image with 8,000 to 10,000 magnification) was converted into an image having two-gradation of white and black by using an image processing software Image J (National Institute of Health, USA), then the number of pixels of white portions and black portions was counted, and the ratio of (the number of pixels of white portions) / (the number of pixels of white portions + the number of pixels of black portions) was set as a filling rate of copper iodide. Note that, the setting of the two-gradation was performed by using an automatic setting function of the above-described software.

In Comparative Example 2-4 in which 1-ethyl-3-methyl imidazolium dicyanamide was used as the ionic liquid, and the crystal growth control agent was not used, and in Comparative Example 2-5 in which 1-ethyl-3-methyl imidazolium bis(trifluoromethane sulfonyl) imide was used as the ionic liquid, and the crystal growth control agent was not used, white portions corresponding to the copper iodide crystal was not found, and the pore of the titanium dioxide was filled with a substance that appears in black in the SEM image. This substance is regarded as the ionic liquid in which the copper iodide is dissolved.

In Example 2-4 in which 1-ethyl-3-methyl imidazolium dicyanamide was used as the ionic liquid, and 1,3-dibuthyl thiourea was used as the crystal growth control agent, it was confirmed that the pore of the dye-adsorbed titanium dioxide that appears in black was filled with the white copper iodide crystal in the SEM image. The filling rate of the copper iodide was calculated from the image analysis of the SEM image. In the case where the filling rate calculated under the conditions that the ionic liquid is not added or the crystal growth prompting agent is not added was set to be 1, the filling rate in Example 2-4 was about 2. In addition, it was found that in the case where the filling rate in Comparative Example 2-1 in which 1-ethyl-3-methyl imidazolium thiocyanate as the ionic liquid which has been used in the related art was used and the crystal growth control agent was not used was set to be 1, the filling rate in Example 2-4 was about 0.8, and the filling rate of the copper iodide which is similar to that in the related method was obtained.

### [Evaluation of solar cell performance -1-]

The performance of the solar cell was evaluated in such a manner that the copper iodide-filled porous titanium dioxide substrate obtained in the above description was set as a working electrode, and a platinum foil (15 µm) was set as a counter electrode, current-voltage properties under the light irradiation of 1 sun and AM 1.5 were measured by using a potentiostat. The results are indicated by relative values in Table 4 (each of measured values obtained in Comparative Example 2-1 was set to be 1).

**[Table 4]**

| | Eff | Jsc | Voc | FF |
|---|---|---|---|---|
| Comparative Example 2-1 | 1 | 1 | 1 | 1 |
| Comparative Example 2-2 | 0.27 | 0.34 | 0.88 | 0.90 |
| Example 2-1 | 1.02 | 0.93 | 1.07 | 1.03 |
| Example 2-2 | 1.01 | 0.97 | 1.21 | 0.86 |
| Comparative Example 2-3 | 0 | 0 | 0 | 0 |
| Example 2-3 | 0.92 | 0.72 | 1.26 | 1.01 |
| Comparative Example 2-4 | 0 | 0 | 0 | 0 |
| Example 2-4 | 0.84 | 0.80 | 1.11 | 0.94 |
| Comparative Example 2-5 | 0 | 0 | 0 | 0 |
| Example 2-5 | 0.19 | 0.26 | 1.14 | 0.65 |
| Comparative Example 2-6 | 0 | 0 | 0 | 0 |
| Example 2-6 | 0.05 | 0.12 | 0.80 | 0.56 |

In Table 4, the results are indicated by setting each of open circuit voltage V_{oc}, short-circuit current J_{sc}, and fill factor FF in Comparative Example 2-1 in which 1-ethyl-3-methyl imidazolium thiocyanate as the ionic liquid which has been used in the related art was used and the crystal growth control agent was not used to be 1.

In Comparative Example 2-1 in which 1-ethyl-3-methyl imidazolium dicyanamide as the ionic liquid was used and the crystal growth control agent was not used, at the time of light irradiation, the current was linearly increased with respect to the voltage application. Accordingly, it was found that the platinum counter electrode and the FTO layer under the porous titanium dioxide layer were short-circuited, and thus the obtained solar cell did not function as a solar cell.

In contrast, in Examples, it was confirmed that when the ionic liquid and the crystal growth control agent were used together, the obtained solar cell exhibited diode properties in the dark, and a photocurrent was generated by the light irradiation. From the aspect that V_{oc} exhibits the value which is equal to or greater than that in the related method, J_{sc} and FF exhibit the value which is greater than that in corresponding Comparative Example, and particularly, the value which is similar to that in the related method exhibits in Examples 2-1 and 2-2, the usefulness of the fully solid dye-sensitized solar cell according to the present invention exhibited.

### [Evaluation of solar cell performance -2-]

The efficiency Eff for each of the copper iodide coating liquids in Table 5 was obtained by evaluating the properties of the solar cell in the same way of [Evaluation of solar cell performance -1-] except that a concentration of the copper iodide coating liquid in the above-described Example 2-2 is changed as indicated in Table 5. The results are indicated as the ratio (rel. Eff. vs. and EMI-SCN) with respect to Eff in Comparative Example 2-1 in Table 5.

**[Table 5]**

| | EMI-Br/mM | Dibuthyl thiourea/mM | rel. Eff. vs. EMI-SCN |
|---|---|---|---|
| Comparative Example 2-7 | 0 | 5 | 0.10 |
| Example 2-7 | 4 | 2.5 | 0.30 |
| Example 2-8 | 4 | 7.5 | 0.15 |
| Example 2-9 | 8 | 0.25 | 0.34 |
| Example 2-10 | 8 | 0.5 | 0.38 |
| Example 2-11 | 8 | 1 | 1.00 |
| Example 2-12 | 8 | 5 | 0.37 |
| Example 2-13 | 12 | 0.5 | 0.40 |
| Example 2-14 | 12 | 1 | 1.00 |
| Example 2-15 | 12 | 2.5 | 0.53 |
| Example 2-16 | 12 | 7.5 | 0.14 |

The results shown in Table 5 indicate that Examples 2-11 and 2-14 particularly exhibited the values similar to that in the related method, and thus indicates the usefulness of the fully solid dye-sensitized solar cell according to the present invention.

In addition, from the results shown in Table 5, it can be seen that among the compositions according to the present invention, the concentration of the crystal growth control agent formed of the sulfur-containing compound is preferably 5 mM or less, and the concentration of the organic salt is preferably approximately 5 to 15 times concentration of the crystal growth control agent.

### Reference Signs List

- 1:: sensitized solar cell
- 2:: conductive substrate
- 3:: porous n-type semiconductor
- 4:: sensitized material
- 5:: photoelectric conversion layer
- 6:: hole transport layer
- 7:: counter electrode layer
- 8:: supporting substrate
- 9:: supporting substrate

## Claims

1. A crystal growth control agent, which controls crystal growth of a p-type semiconductor and comprises at least one sulfur-containing compound (except for thiocyanate) selected from the group consisting of a compound, which generates a thiolate anion due to dissociation of a proton or a cation, and a disulfide compound.

2. The crystal growth control agent according to claim 1, wherein the sulfur-containing compound is at least one selected from the group consisting of a thiol compound, a dithiocarboxylate compound, a dithiocarbamate compound, a thioamide compound or a tautomer thereof, a thiourea compound or a tautomer thereof, and a disulfide compound.

3. A method for forming p-type semiconductor microparticles or a p-type semiconductor microparticle film, the method comprising a step of crystallizing a p-type semiconductor in the presence of the crystal growth control agent according to claim 1 or 2.

4. The method for forming p-type semiconductor microparticles or a p-type semiconductor microparticle film according to claim 3, wherein the p-type semiconductor is crystallized in holes of a porous n-type semiconductor so that at least some of holes which the porous n-type semiconductor has are filled with the p-type semiconductor.

5. A composition for forming a hole transport layer of a solar cell, comprising a p-type semiconductor, and the crystal growth control agent according to claim 1 or 2.

6. The composition for forming a hole transport layer according to claim 5, which does not contain an organic salt.

7. A solar cell comprising:
a photoelectric conversion layer and a hole transport layer, which is formed of the composition for forming a hole transport layer according to claim 5 or 6, between a conductive substrate and a counter electrode layer.

8. A solar cell comprising:
a conductive substrate;
a photoelectric conversion layer which is provided on the conductive substrate and which includes a porous n-type semiconductor having holes and a sensitized material adsorbed on the porous n-type semiconductor;
a hole transport layer which is provided on the photoelectric conversion layer, which is formed of the composition for forming a hole transport layer according to claim 5 or 6, and with which at least some of the holes are filled; and
a counter electrode layer which is provided on the hole transport layer.

9. A composition for forming a hole transport layer of a solar cell, which comprises a p-type semiconductor; an organic salt; and a crystal growth control agent which controls the crystal growth of the p-type semiconductor and contains at least one of sulfur-containing compounds (except for thiocyanate) selected from the group consisting of a compound, which generates a thiolate anion due to dissociation of a proton or a cation, and a disulfide compound.

10. The composition for forming a hole transport layer according to claim 9,
wherein the sulfur-containing compound is at least one type selected from the group consisting of a thiol compound, a dithiocarboxylate compound, a dithiocarbamate compound, a thioamide compound or a tautomer thereof, a thiourea compound or a tautomer thereof, and a disulfide compound.

11. The composition for forming a hole transport layer according to claim 9 or 10,
wherein the organic salt contains at least one anion selected from the group consisting of a bromide ion, a chloride ion, an iodide ion, and a dicyanamide ion.

12. A solar cell comprising:
a photoelectric conversion layer and a hole transport layer, which is formed of the composition for forming a hole transport layer according to any one of claims 9 to 11, between a conductive substrate and a counter electrode layer.

13. A solar cell comprising:
a conductive substrate;
a photoelectric conversion layer which is provided on the conductive substrate and includes a porous n-type semiconductor having holes and a sensitized material adsorbed on the porous n-type semiconductor;
a hole transport layer which is provided on the photoelectric conversion layer, which is formed of the composition for forming a hole transport layer according to any one of claims 9 to 11, and with which at least some of the holes are filled; and
a counter electrode layer which is provided on the hole transport layer.
